# EUROPEAN PATENT APPLICATION

(11) **EP 2 599 754 A1**
(43) Date of publication of application: **05.06.2013**
(21) Application number: 10747060.1
(22) Date of filing: 26.07.2010
(51) Int. Cl.: C02F 3/00, C02F 3/30, C02F 101/16

(54) **SYSTEM AND METHOD FOR TREATING WATER**

(71) Applicant: Acciona Agua, S.A.U., 28100 Alcobendas (Madrid) (ES)
(72) Inventor: RODRÍGUEZ LÓPEZ, Carlos, E-28108 Alcobendas (Madrid) (ES); HERNÁNDEZ ROMERO, Crístina, E-28108 Alcobendas (Madrid) (ES); LARREA URCOLA, Luís, E-20018 San Sebastian (ES)
(74) Representative: Pons Ariño, Maria Purificación
(86) International application number: PCT/ES2010/070513
(87) International publication number: WO 2012/013829

(57) **Abstract**

The invention relates to a very effective method for biological removal of ammonia, specifically applied to returning waste water from the draining of sludge in urban Waste Water Treatment Plants, by implementing ammonia, nitrite and nitrate sensors on the line, in a system that includes the following units: a holding tank in which waste waters are stored; an anoxic tank for pre-denitrification using an external source that contains carbon-biomass both in the biofilm and in suspension; an aerated tank for nitrification in the biofilm and in suspension and recirculation to the anoxic tank; and a sedimentation tank for the clarifying the effluent and recirculating the sludge, if applicable. The design of the system and the controllers are based on a calibrated model.

## Description

### OBJECT OF INVENTION

The object of the invention relates to a method for the removal of ammonium from wastewater coming from dewaterings in urban WWWTPs.

### BACKGROUND OF THE INVENTION

Conventionally, nitrogen removal of urban wastewater is carried out through complete predenitrification-nitrification processes with biomass in suspension (Reactions 1 and 2). Its robustness in performance has been shown in Galindo WWTP, where on-line sensors of ammonia and nitrate were applied in the activated sludge process, the secondary treatment of the water line (Ayesa et al, 2006).

Nitrification: NH₄⁺ + 2O₂ → NO₃⁻ + H₂O + 2H⁺ (Reaction 1)

Step 1 Nitritation: NH₄⁺ + 1.5O₂ → NO₂⁻ + H₂O + 2H⁺ by ammonium oxidizers X_{NH} (Reaction 1a)

Step 2 Nitratation: NO₂⁻ + 0.5O₂ → NO₃⁻ by nitrite oxidizers X_{NO} (Reaction 1b)

### Denitrification;

6NO₃⁻ + 5CH₃OH → 3N₂ + 5CO₂ + 7H₂O + 6OH⁻ by heterotrophic biomass (X_{H}) (Reaction 2)

Step 1: 6NO₃⁻ + 2CH₃OH → 6NO₂⁻ + 2CO₂ + 4H₂O (Reaction 2a)

Step 2: 6NO₂⁻ + 3CH₃OH → 3N₂ + 3CO₂ + 3H₂O + 6OH⁻ (Reaction 2b)

For nitrification of ammonium-rich return wastewater at high temperatures (25-35° C), partial nitrification (nitritation) is nowadays feasible, producing nitrite by ammonium oxidizers (X_{NH}) (Reaction 1a) and only little nitrate, by washing out nitrite oxidizers (X_{NO}) (Reaction 1 b). Different methods have been proposed by using either biomass in suspension (Patent No US 6.183.642 B1, 2001 y Hellinga et al, 1998) or biomass in carriers (Patent No GB 2.333.522 A, 1999; Gut et al, 2006) and based on the regulation of the solids retention time (SRT), ph and dissolved oxygen (DO)

For nitrite removal, a recent invention has been developed (Patent No US 6.383.390 B1, 2002 and Van Dongen et al, 2001), which combines partial nitritation and the new reaction K anaerobic ammonium oxidation (anammox) Reactions 3 and 4

### Partial nitritation:

NH₄⁺ + 0.75O₂ + HCO₃⁻ → 0.5NH₄⁺ 0.5NO₂⁻ + 1.5H₂O + CO₂⁻ by X_{NH} (Reaction 3)

Anammox: NH₄⁺ + 1.32NO₂⁻ + 0.066HCO₃⁻ + 0.13H⁺ →→ 1.02N₂ + 0.26NO₃⁻⁺ 2.03H₂O + 0.066CH₂O_{0.5}N_{0.15} by X_{AN} (Reaction 4)

For this purpose, partial nitritation must be carried out in a first aerated reactor, so that an accurate ratio of N-NH₄⁺/N-NO₂⁻ = 1:1.3 must be obtained in the effluent. This is a difficult task considering the fluctuations of the input wastewater and environmental conditions (temperature, pH, etc), and some inventions have been proposed (Patent No US 7.144.508 B2, 2006; Strous et al, 1997) to achieve that. In addition, anammox bacteria has a very low growth rate, so that the secondary step is very sensitive to fluctuations in operational conditions and is consequently easily inhibited. In fact, only few industrial scale plants are in operation worldwide, and reliable performance has not yet been clearly documented to date.

In this context, a recent patent (Patent No US 7.645.385 B2, 2010) based in this approach using a SBR reactor with biomass in suspension has been published. A method for automatic control of the complete nitritation with biomass in suspension has likewise been recently patented, by using pH, DISSOLVED OXYGEN and SOLIDS RETENTION TIME controllers (Patent No W02009/046415 A1)

### DESCRIPTION

The present invention proposes an original approach both in the principles for a simpler nitrogen removal system (complete nitritation and methanol denitritation) and in the automatic control method.

Therefore, a simpler system is proposed here in order to guarantee a robust and reliable performance at industrial scale. Thus, complete nitritation is proposed in the first step and carbon source added for denitrification of the nitrites. In this way, 25% of oxygen consumption and 40% of carbon source is saved with respect to conventional predenitrification-nitrification.

Complete nitritation NH₄⁺ + 1.5O₂ → NO₂⁻ + H₂O + 2H⁺ (5)

Denitritation with methanol 6NO₂⁻ + 3CH₃OH → 3N₂ + 3CO₂ + 3H₂O + 6OH⁻ (6)

Regarding the nitrogen removal the object of the invention uses four separate units.

A holding tank, to dampen the discontinuous flow-rate of the wastewater from dewatering that can have very different patterns from plant to plant. In this way, the flow-rate to predenitritation reactor (Qfeed) is continuous and regulated by the automatic control system. The holding tank also serves as a settler in order to remove suspended solids.

A predenitritation reactor, designed to remove (to nitrogen gas) all nitrites recycled from the nitritation reactor (Qrint). The denitritation takes place primarily by the dosage of a carbon source (Qc). In some plants, the wastewater contains soluble Biochemical oxygen demand (BOD) from other units in the sludge line and it could be used for predenitritation, thus reducing the carbon source dosage. The use of predenitritation instead of postdenitritation allows influent BOD removal when present, thereby preventing inhibition of amonium oxidizers (X_{NH}) in the subsequent aerated biofilm. Consequently, higher and stable niritation rates can be achieved.

A nitritation reactor accomplishes the stable transformation of ammonium to only nitrite because nitrite oxidizers (X_{NO}) are consistently washed out from the system by an appropriate robust control system. The use of separated units for the denitritation and nitritation (compared to other proposals) allows their optimum control. The ammonium oxidizers (X_{NH}) and the heterotrophic biomass (X_{H}) for denitritation can be located both in the biofilm of carriers and in suspension.

A Settler allows a robust automated system and aims to clarify the inlet flux of suspended solids and to obtain a thickened sludge.
The use of a control system based on nutrient analysers (NH₄⁺, NO₂⁻ and NO₃⁻) as opposite to control approaches based on conventional sensors (pH, ORP, etc.).

All these characteristics increase the flexibility and versatility of the system, so that it can be adapted to very different scenarios of wastewater characteristics presented in the return stream of urban full scale WWTPs

### DESCRIPTION OF THE DRAWINGS

The foregoing and other objects and advantages of the invention will be appreciated more fully from the following further description thereof, with reference to the accompanying drawings wherein:

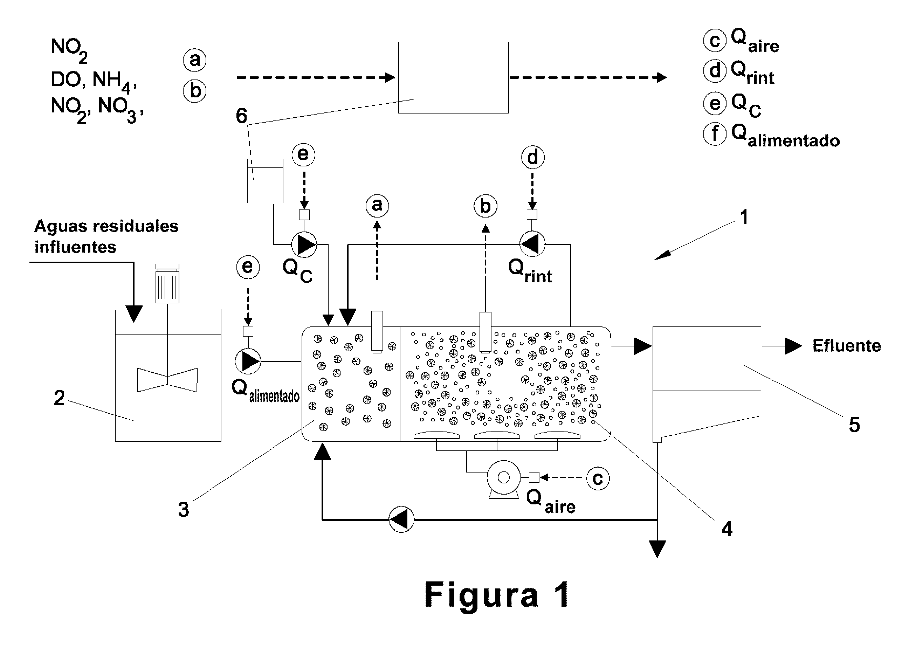

Figure 1: Depicts a diagram of the system of the invention and its parts.

### PREFERRED EMBODIMENT

In a preferred embodiment the system (1) of the invention gets wastewater from a dewatering which is stored and damped in a holding tank (2); the discontinuous flow-rate of the wastewater from dewatering that can have very different patterns from plant to plant. In this way, the flow-rate [Qfeed] to an anoxic predenitritation reactor (3) is continuous and regulated by an automatic control system (6).

As depicted on figure 1, the predenitritation reactor (3) is designed to remove [to nitrogen gas] all nitrites recycled from a nitritation reactor (4) [Qrint]. The denitritation takes place primarily by the dosage of a carbon source [Qc]. In some plants, the wastewater contains soluble Biochemical oxygen demand [BOD] from other units in the sludge line and it could be used for predenitritation, thus reducing the carbon source dosage. The use of predenitritation instead of postdenitritation allows influent BOD removal when present, thereby preventing inhibition of amonium oxidizers [X_{NH}] in the subsequent aerated biofilm. Consequently, higher and stable niritation rates can be achieved.

The nitritation reactor (4) accomplishes the stable transformation of ammonium to only nitrite because nitrite oxidizers [X_{NO}] are consistently washed out from the system by an appropriate robust control system. The ammonium oxidizers [X_{NH}] and the heterotrophic biomass [X_{H}] for denitritation can be located both in the biofilm of carriers and in suspension.

A settler (5) allows a robust automated system (1) and aims to clarify the inlet flux of suspended solids and to obtain a thickened sludge. The use of a settler (5) provides different alternatives for operation.

In this preferred embodiment of the invention the settler (5) is located at the end of the system (1) and to not make use of the sludge recycle to the predenitritation reactor (3). Hence, the concentration of suspended solids will be relatively low [200 - 500 mg/l]. Denitritation and nitritation will take place, both in the biofilm of the carriers and in suspension.

In another embodiment of the sludge recycle is used in order to increase the concentration of the suspended solids, and the corresponding denitritation and nitritation rates. However, washing out of X_{NO} is more difficult since solid retention time [SRT] increases.

In yet another embodiment of the invention the settler (5) is located between the reactors (3,4), with the sludge recycled to the predenitritation reactor (3). Thus, the denitritation rate can be relatively high and nitritation better guaranteed. Nevertheless, the inlet suspended solids flux to the settler (5) is very high because of the high internal recycle flow-rate, thus demanding a larger surface for the settler.

Following the diagram of figure 1 the control system (6) entails the following strategies, noting the automatic control (6) of the system (1) is based on the use of (NH₄⁺, NO₂⁻ and NO₃⁻) as nutrient analysers based on sensors placed along the system, preferably at the reactors (3,4):
- Automatic control of dissolved oxygen in the nitration reactor (4): [Qair] is automatically manipulated according to the discrepancies between a pre-set dissolved oxygen value [dissolved oxygen set-point] and the dissolved oxygen measurements in the nitration reactor (4).
- Automatic regulation of the dissolved oxygen set-point: the dissolved oxygen set-point is automatically modified according to:
   - a pre-set N-NH₄⁺ value [N-NH₄⁺ set-point], and
   - the N-NH₄⁺ and N-NO₃⁺ measurements in the nitration reactor (4).
- Q_{feed} is manipulated as a function of the N-NH₄⁺ measurements in the nitration reactor (4) and the N-NH₄⁺ set-point
- Automatic control of N-NO₂⁻ in predenitritation reactor (3): Q_{c} [external carbon flow-rate] is automatically manipulated so that the N-NO₂⁻ measurements in the prenitration reactor (3) follow a pre-set level of N-NO₂⁻ [N-NO₂⁻ set-point in the prenitration reactor (3)]
- Automatic control of N-NO₂⁻ in nitritation reactor (4): Qᵣᵢₙₜ is automatically manipulated as a function of:
   - a pre-set value of N-NO₂⁻ [N-NO₂- set-point in the nitration reactor (4), and
   - the measurements of N-NO₂⁻ in the nitration reactor (4).

## Claims

1. A system (1) for water treatment **characterized by** comprising:
- a holding tank (2) for dampening a discontinuous flow-rate of wastewater from dewatering,
- a nitritation reactor (4) adapted to transform ammonium contained in the wastewater coming from the holding tank (2) into nitrites,
- a predenitritation reactor (3) adapted to remove the nitrites transformed by the nitritation reactor (4)
- a settler (5) for effluent clarification and sludge recycle, and
- sensors placed in the nitritation reactor (4) and the predenitritation reactor (3) for detecting at least ammonium, nitrites and nitrates.

2. System (1) according to claim 1 **characterised by** additionally comprising an automatic control system (6) for controlling and regulating the flow-rate coming into the holding tank (2).

3. System (1) according to claim 2 wherein the automatic control is based on nutrient analysers.

4. System (1) according to claim 2 wherein the nutrient analysers are selected from the group consisting of: NH₄⁺, NO₂⁻ and NO₃⁻.

5. System (1) according to claim 1 wherein the holding tank (2) is further adapted to remove suspended solids from the wastewater by settling them.

6. System (1) according to claim 1 wherein the settler (5) is located at the end of the system (1).

7. System (1) according to claim 1 wherein the settler (5) is allocated between the nitritation reactor (4) and the predenitritation reactor (3).

8. Method for water treatment using the system (1) described in any of claims 1 to 7 **characterised by** comprising the following steps:
- storing and dampening the wastewater in the holding tank (2) in order to dampen and normalize the flow-rate,
- transforming the ammonium present in wastewater into nitrites using nitrite oxidizers in the nitration reactor (4), and
- removing the nitrites obtained using the predenitration reactor (3) by dosing a carbon-containing source with biomass, both in biofilm and in suspension

9. Method according to claim 8 **characterised by** further comprising controlling and regulating the flow-rate coming into the holding tank (2) by using the nutrient analysers based on sensors placed along the system (1).
